# EUROPEAN PATENT APPLICATION

(11) **EP 2 662 788 A1**
(43) Date of publication of application: **13.11.2013**
(21) Application number: 13166570.5
(22) Date of filing: 05.05.2013
(51) Int. Cl.: G06F 17/30

(54) **Document generation system and method for generating a document**

(30) Priority: 08.05.2012 NL 1039585
(71) Applicant: Van der Heijden, Henricus, 2360 Oud-Turnhout (BE)
(72) Inventor: Van der Heijden, Henricus, 2360 Oud-Turnhout (BE)

(57) **Abstract**

The invention provides a system for generating a digital output document (34, 44, 54, 71), comprising
- a database unit (10, 60) comprising digital documents, said digital documents comprising digital references to each other;
- a document selection unit (11, 62), for selecting (20) a digital document from the database unit as an input document (30, 40, 50); and
- a document enhancement unit (12, 63);
wherein the document enhancement unit (12, 63) is configured to
- generate (21) a first list of items identifying digital documents to which the input document comprises at least one reference;
- generate (22) a second list of items identifying digital documents which documents comprise at least one reference to the input document;
- combine (23) the first and the second list of items identifying digital documents to form a combined list of items identifying digital documents; and
- generate (24) a digital output document comprising an extract or the full contents of the input document and digital references to each digital document identified by an item on the combined list.

## Description

### FIELD OF THE INVENTION

The invention relates to a document generation system. The invention further relates to a method for generating a document and to a computer medium.

### BACKGROUND OF THE INVENTION

Documents created in recent times are typically available in digital form. More and more, documents are distributed in digital form, for example as HyperText Markup Language (HTML) or Portable Document Format (PDF) documents via the world wide web. These digital documents can have digital references to other digital documents.

A well-known example of a digital reference is a HTML hyperlink (in technical terms: the "href" attribute of an HTML "a" (anchor) tag). Other digital document formats such as PDF or Microsoft Office documents also provide ways to refer to other digital formats of the same or another type, either based on open standards such as HTML or proprietary standards. In this application, these types of digital references, which refer unambiguously to another document will be called "direct digital references".

Another type of digital references, hereafter "convention-based digital references", are based on conventions for referring to other documents which are suitable for being interpreted by a computer program. An example is the text string "Art. 54 EPC 1973" which by convention refers to the text of article 54 of the 1973 version of the European Patent Convention (EPC). Another example is the text string "G [x]/[y]" with [x] and [y] being integers, which in the context of the EPC refers to a decision of the Enlarged Board of Appeal. Unless otherwise specified, the term "digital reference" or "reference" for short can indicate both a direct or a convention reference in a digital document.

Because the digital documents have references, which are also termed links, to each other, a reader of a first document can consult a second document to read further information. In the case of direct digital links, a reader can usually "point and click" or perform some other action in the user interface of the device displaying the first document in order to retrieve and display the second document. In the case of a convention-based reference, the user typically has to perform a few actions, such as opening a website, performing a search query, navigating a table of contents or sitemap document, etc.

In both cases, it is a drawback that the user must actively follow the reference in order to discover details about the contents of what the referenced document.

Another drawback is that the user will only see references comprised in the first document. Consider for example, a first document that contains the text of an article of law and a second document that contains an explanation on how the article of law is to be applied in certain cases, referencing the first document. When the user reads the first document, he has no way of knowing that the second document, which comprises relevant information, exists, since the first document does not refer to the second document. It would be necessary for an editor to add for example a footnote to the first document referencing the second document. This has the drawback that it requires editorial updates each time a relevant document is created.

US 6 289 342 B1 discloses an autonomous citation indexing system. The system parses citations from papers and identifies citations to the same paper that may differ in syntax. The CiteSeerX scientific literature digital library, as developed at and hosted by The College of Information Sciences and Technology at Penn state, provides an automated citation indexing system. However, these prior art discloses do not address the above-described issue of how to make a reader of a first document aware that a further document may comprise relevant further information.

It is a goal of this invention to provide a document generation system configured to generate documents that overcome at least one of the above mentioned drawbacks.

### SUMMARY OF THE INVENTION

An object of the invention is met by providing a system for generating a digital output document, comprising
- a database unit comprising digital documents, said digital documents comprising digital references to each other;
- a document selection unit, for selecting a digital document from the database unit as an input document;
- a document enhancement unit, for generating the digital output document by enhancing the input document;
wherein the document enhancement unit is configured to
- generate a first list of items identifying digital documents to which the input document comprises at least one reference;
- generate a second list of items identifying digital documents which documents comprise at least one reference to the input document;
- combine the first and the second list of items identifying digital documents to form a combined list of items identifying digital documents; and
- generate a digital output document comprising an extract or the full contents of the input document and digital references to each digital document identified by an item on the combined list. The references in the output document can be ordered in a list, for example sequentially based on alphabet or a document numbering.

In an embodiment according the invention the first list is generated by parsing the input document for references or by retrieving a previously stored result of such a parsing action. The second list is generated by parsing digital documents to be identified on the second list (which documents may be available from the database unit) for references or by retrieving previously stored results of such parsing actions.

A "digital document", as the term in used in this application, is typically not a voluminous document such as a book. In fact, it is advantageous if the digital documents that are used by the system or method according the invention comprise well-rounded information with a clear topic, preferably information which can be read by a person in a few minutes. Individual law articles are a good example. For example, the earlier referenced Article 54 of the European Patent Convention could form a digital document with the topic "Novelty". A commentary text on, for example, the types of publications that are considered for establishing novelty could then refer to just the document on Article 54 EPC rather than to the entire European Patent Convention.

A digital document may be stored as a file in a file system of an operating system, which then effectively acts as a database. However, it may be more convenient to store a digital document in a database as a database record in a database, preferably one that than can be accessed using Structured Query Language (SQL) commands. An advantageous embodiment of the invention is a client - server system in which the client can effectively select input documents by sending a request to a server, and the server will generate an output document by first retrieving the selected input document and then enhancing it. In other words, the invention provides a system further comprising a document server, such as a HyperText Transfer Protocol, HTTP, server, said server being connected to the document enhancement unit, wherein the server is configured to
- receive a request for a digital document from a client connected via a network, such as a HTTP client connected via an Internet Protocol, IP, network;
- cause the document selection unit to select the digital document as the input document from the database unit;
- cause the document enhancement unit to generate the digital output document by enhancing the input document; and
- send the digital output document to the client as response to the request.

In an embodiment according the invention, the digital output document includes a digital reference that is provided with a user interface control which, if triggered via the client, causes an extract or the full contents of the document referenced by the reference to be shown as part of the output document.

The various embodiments are particularly well-suited for enhancing documents that have numerous interdependencies and preferably a hierarchical structure. A good example is a collection of related articles of law, implementing regulations, legal commentaries, guidelines, "how-to" manuals, etc. The generated output documents according to embodiments of the invention effectively bring out the interdependencies of the documents so that the reader of the enhanced document can more efficiently get an overview of the available information and find the required details.

In other words, the user can more efficiently explore the available documents because embodiments of the invention provide the twin advantages of highlighting potentially relevant related documents and making it easy to quickly check the contents of said highlighted documents.

It is also an advantage of the invention, in particular for larger document sets comprising thousands of documents, that any changes in the documents are automatically accounted for since the output documents are automatically generated based on the latest available version of the documents.

The invention also provides a method for generating a digital output document, the method comprising
- selecting a digital document as an input document;
- generating a first list of items identifying digital documents to which the input document comprises at least one reference;
- generating a second list of items identifying digital documents which documents comprise at least one reference to the input document;
- combining the first and the second list of items identifying digital documents to form a combined list of items identifying digital documents; and
- generating a digital output document comprising an extract of the input document and digital references to each digital document identified by an item on the combined list.

The invention also provides a computer-readable storage medium comprising a computer program that, when executed on a computer, performs a method as described above or causes the computer to behave as a system as described above.

### BRIEF DESCRIPTION OF THE FIGURES

The invention will be further explained in reference to the attached drawings sheets, in which
- figure 1 schematically shows a document generation system according to an embodiment of the invention;
- figure 2 schematically shows a method for generating a document according to an embodiment of the invention;
- figures 3, 4, and 5 schematically show a number of digital documents and a generated digital document according to an embodiment of the invention; and
- figure 6 schematically shows a client-server system according to an embodiment of the invention.
- figure 7 schematically shows an expandable digital output document according to an embodiment of the invention.

### DETAILED DESCRIPTION

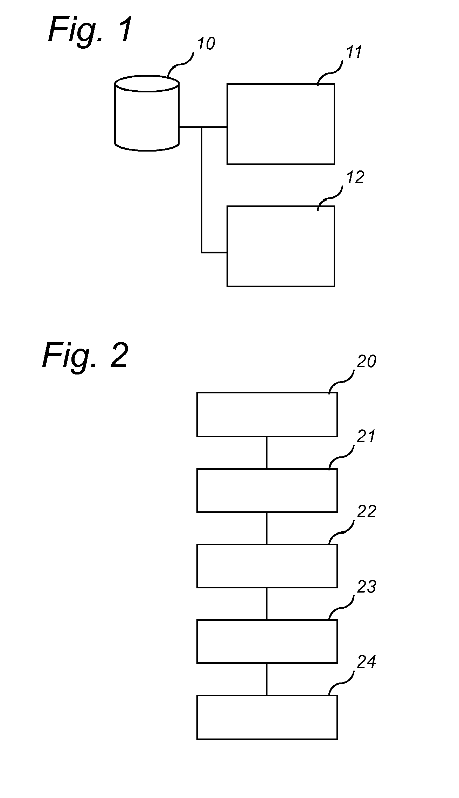

Figure 1 schematically shows a document generation system according to an embodiment of the invention. The system comprises a database unit 10, a document selection unit 11, and a document enhancement unit 12.

The database unit 10 comprises database records representing digital documents. These documents can be stored in any suitable digital format, e.g. as HTML, extensible Markup Language (XML), PDF, Microsoft Word, or plain ASCII or Unicode text-based documents. The database unit 10 is configured to respond to search queries from a database client by delivering matching documents or other data to said database client. A database may be provided with a Structured Query Language (SQL) interface for communicating with database clients.

The document selection unit 11 can act as a database client. It is configured to select and retrieve from the database 10 a digital document, which will hereafter be called the digital input document, or input document for short. The document selection unit 11 can communicate with both the database unit 10 and the document enhancement unit 12.

The document enhancement unit 12 is configured to receive the input document from the document selection unit 11. The document enhancement unit 12 is further configured to generate a first list identifying documents to which the input document refers via digital references in the input document. There are various ways available to generate this list. The document enhancement unit 12 can parse the digital input document to determine which references the input document comprises. The list of references can then be filtered to remove duplicates. This (filtered) list of references can then be called a list of items identifying digital documents.

Parsing a document can comprise various actions, depending on the type of digital reference(s) comprised in the document. If the references are HTML hyperlinks, parsing may comprise creating the HTML document structure and identifying anchor tags with HREF attributes. If the references are in plain text, the parsing step may comprise pattern matching, for example to find text parts of the form "G [x]/[y]" where [x] and [y] are integers. Other digital document formats or referencing conventions may give rise to other parsing strategies. A parsing strategy can comprise parsing for more than one type of reference.

Returning to the topic of generating the first list identifying documents that the input document refers to, a second way of generating said list is made possible by adding a table to the database unit 10 which lists, for each digital document, a list of items identifying further digital documents that are being referenced by the digital document. The data of such a table can be generated in the same way as described above, by parsing each digital document. When a document is added to the database 10, an indexer program can automatically generate the reference data and add it to the table. The first list can then be generated by the document enhancement unit by querying the database for the first list for the specified input document. This second way has the advantage that the parsing step, which may be computationally expensive, is done only once.

It is also possible to generate a list of items wherein the items are database keys uniquely identifying a digital document. Any type of data identifying a digital document can serve as item on such a list of items.

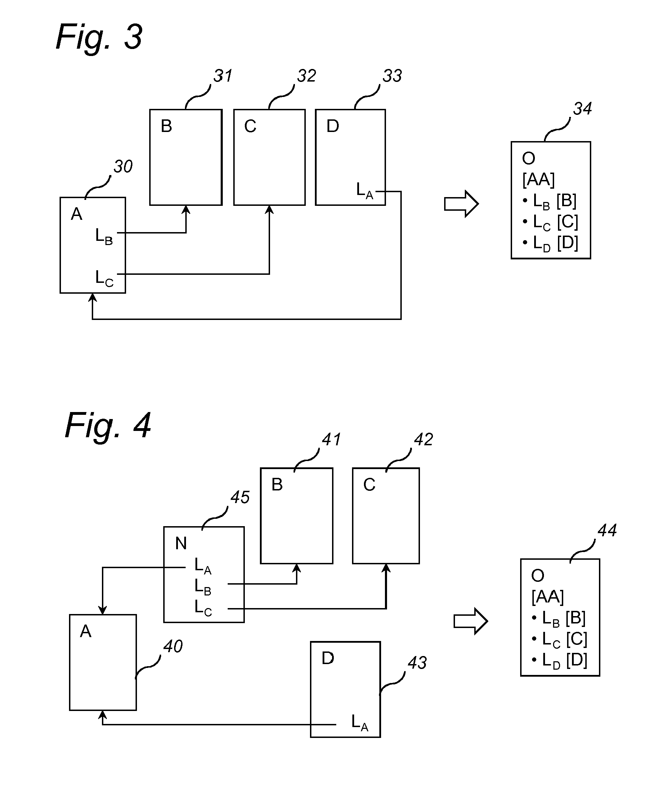

In a further action, the document enhancement unit generates a second list of items identifying documents that reference the selected input document. In this case, it is particularly advantageous to use the database table as described above (the second way example), since otherwise all other digital documents in the database have to be parsed each time the references in said documents are needed. This is, especially for larger sets of digital documents, computationally more expensive and thus also more time consuming. A specific example of such a table will be given in reference to the example of figure 3.

The document enhancement unit 11 is configured to combine the first and the second list in a combined list of items identifying digital documents. Duplicate items are removed, so that each document is identified at most once. The ordering in the combined list may be ordered according to a criteria. For example, the combined list may be ordered so that digital documents belonging to a same type or category are listed sequentially. Alternatively or in addition, a different ordering may be used, for example alphabetically on title, chronologically based on a document time stamp or publication date, or based on chapter / section numbers.

The combined list thus identifies all digital documents (in the database) that the current input document comprises a reference to and all digital documents that comprise a reference to the current input document.

The document enhancement unit 11 is further configured to generate an output document based on the selected input document and the combined list. In an embodiment, the generated output document comprises extracted data from the input document. Extracted data can also be the full input document contents. It can also be a summary of the input document, the title of the input document, or even just a reference to the input document. In addition, the generated output document comprises references based on the identifying items on the combined list. The generated output document thus can show a list of references to all documents that are referenced by the current input document or that reference the current input document. In an advantageous embodiment, the generated output document comprises, next to or instead of the digital reference based on the items of the combined list, extract information from the identified documents, such as a title or a summary. The purpose of this extract information can be to better allow a reader of the generated document to judge the relevance of a particular reference. In other words, to assess the question whether the reference is likely to offer additional interesting details.

In an embodiment according the invention, the digital output document comprises (an ordered list of) references to all documents that are referenced by the current input document or that reference the current input document, wherein the digital output document is further configured to, when displayed using a suitable display unit and on the request of a user, show the contents or extracts of an document referenced in the list. Such an output document can be termed an "expandable" output document.

A first practical example of an expandable output document is an HTML document which contains not just the references of the combined list but, adjacent to each reference, also the full contents of the referenced document, where the full contents is initially hidden from viewing using an appropriate Content Style Sheet (CSS) attribute (e.g. "display:none") and/or JavaScript command. The reference in this example is further provided with an button or other control element that, when triggered, triggers a piece of JavaScript code that updates the CSS attribute so that the full contents of the selected document is shown.

A second practical example of an expandable output document is one wherein the output document does not initially comprise the full contents, but wherein the aforementioned button triggers a so-called AJAX (Asynchronous JavaScript And XML) based retrieval of the full contents of the selected document. Using the asynchronous communication of the AJAX technique, the retrieved contents can be merged in the output document already being displayed without fully loading a new document.

Figure 2 schematically shows a method for generating a document according to an embodiment of the invention as just described in reference to the document generation system of figure 1. To summarize, the method comprises the actions of
- selecting 20 a digital input document;
- generating 21 a first list identifying digital documents that the digital input document refers to (comprises a reference to);
- generating 22 a second list identifying digital documents that refer to (comprise a reference to) the digital input document;
- combining 23 the first and second lists in a combined list;
- generating 24 a digital output document comprising the full contents or an extract of the input document and references to the documents identified on the combined list, optionally with additional extract information from each of said documents.

Steps 20 and/or 21 can comprise parsing documents for obtaining references, or looking up references for the documents in a database table.

All of the alternatives and additional features disclosed in reference to the document generation system apply to the method as well. Aspects of a document generation system and method for generating a document according the invention will be further disclosed based on a discussion of figures 3, 4, and 5 which schematically show a number of digital documents and a generated digital documents.

Figure 3 shows an input document 30 labeled A. The input document comprises references L_{B} and L_{C} to digital documents 31 (B) and 32 (C) respectively. Besides documents 30, 31, and 32, the database 10 also comprises document 33 labeled D. D comprises a reference L_{A} to A (document 30).

When the method or system according the invention is applied to this example set of documents, the first list will then comprise documents 31 and 32, since input document 31 references these documents through references L_{B} and L_{C}. The second list will comprise document 33, since this document references document 30 through reference L_{A}. The combined list will thus identify documents 31, 32, and 33 or B, C, and D. The combined list may be formed of the references L_{B}, L_{C}, L_{D}.

If the database has a table of document references, as already described in reference to figure 1, said table could for the present example of figure 3 look like Table 1 below:

**TABLE 1**

| *doc_id* | *referenced_id* |
|---|---|
| A | B |
| A | C |
| D | A |

In Table 1, for each reference in each document a row is created. Column 1 indicates the document in which the reference is found, column 2 indicates the document that is referenced. Since document A has two references L_{B} and L_{C}, two rows are created with "A" in column one, one row with B in column 2 and one row with C in column 2. Since documents B and C have no references, there are no rows with B or C in column 1. The last row is for document D comprising a reference L_{A} to A.

Based on such a table layout, for input document A the first list can be generated by a SQL command like
"FROM <Table 1> SELECT <Column 2> WHERE <Column 1> = A",
and the second list can be generated by
"FROM <Table 1> SELECT <Column 1> WHERE <Column 2> = A".

It may be possible to use a database system that can generate the first and second list at once, or even generate the combined list with a single database query. However, even though the query results the combined list at once, internally the actions for generating the first and second list are still being performed.

The generated output document 34, labeled O, comprises extensive extract information from input document A, indicated by [AA]. Document 34 further comprises a list of the references L_{B}, L_{C}, L_{D} with respective further brief abstracts [B], [C], [D] of the referenced documents B, C, and D, in order to show the relevance of the referenced document.

It can be advantageous to use specifically designed database tables to efficiently create the generated output document. Consider the following table layout in Table 2 for digital documents in the database:

**TABLE 2**

| *Field name* | *Field description* |
|---|---|
| doc_id | Unique reference to the document |
| doc_cat | Category of the document |
| doc_title | Title of the document |
| doc_contents | Full contents |

Document data is then stored as indicated in Table 3:

**TABLE 3**

| *doc_id* | *doc_cat* | *doc_title* | *doc_contents* |
|---|---|---|---|
| A | z | Title A | [AA] : Contents of A |
| B | x | Title B | [BB] |
| C | y | Title C | [CC] |
| D | x | Title D | [DD] |

The data required to compose output document 34 can then be retrieved with the following SQL queries:
"FROM <Table 3> SELECT doc_contents WHERE doc_id = A",
   in order to retrieve the extensive extract information (in this case the full contents) [AA] for input document A, and
"FROM <Table 3> SELECT doc_title WHERE doc_id IN (B, C, D)",
to retrieve the extract (title) information [B], [C], [D] for the documents identified on the combined list (B, C, D). By using a well-designed database table, it is not needed to read and parse the full contents of documents just to obtain a title. This has the advantage that the system will be faster and consume less computational resources.

Figure 4 shows a further example according the invention. Here 40 indicates the input document A, whereas documents B, C, and D are indicated by 41, 42, and 43 respectively. Document 45, labeled N, is a so-called "Node" document. When the system or method generates the second list and it comes across a Node document which comprises a reference to the input document, the system or method will proceed to add all other references found in that Node document to the second list, but not a reference to the node document N itself.

In the current example, the input document A does not comprise references to document B or C. Documents B or C will thus not end up on the first list. Since documents B and C also do not reference document A, normally the documents B and C would also not end up on the second list. However, since the Node document N comprises references to A (the input document), B, and C, the second list will comprise references to B and C. The end result is in fact very similar to the result of the example in figure 3: the output document O, 44, comprises references to and extracts of documents B, C, and D.

A node document thus serves as a sort of container for references to documents that are related to each other. As a practical example, in legal frameworks it is common to have high-level law articles and, corresponding to each law article, more detailed implementing rules. The law article and its implementing rules then form a set of documents that form a well defined group. By creating a node document 45 which comprises references to each of the documents in the group, it can be ascertained that when one of the documents in the group is the input document, then the other documents of the group will always be referenced in the output document.

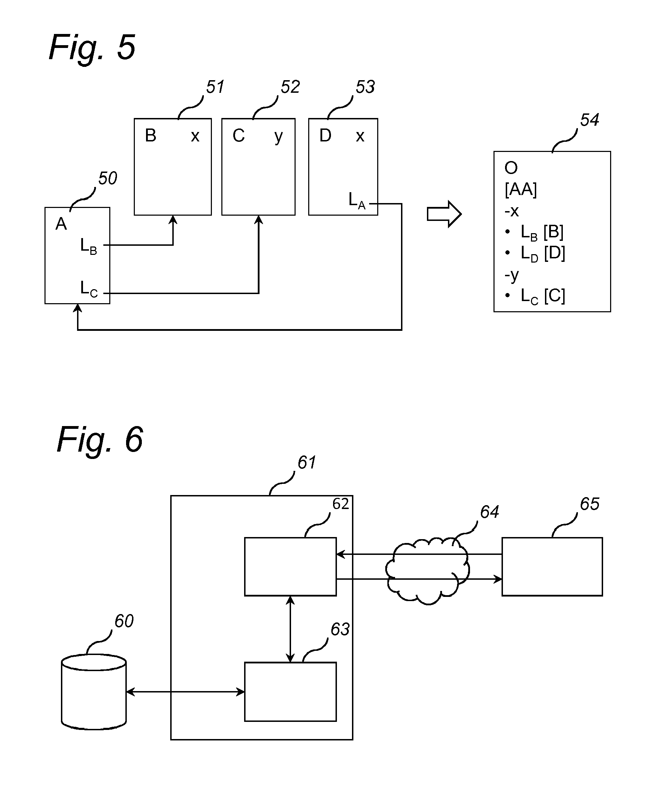

Figure 5 shows a further example according the invention. Document 50, labeled A, references documents labeled B and C, indicated by 51 and 52 respectively and document 53, labeled D, comprises a reference to document A. Each of the documents B, C, and D will thus be referenced in the output document 54. Documents 51, 52 and 53 are now also tagged with a document category attribute (this is the purpose of the column "doc_cat" in Table 3). Documents 51 and 53 are of type "x", and document 52 is of type "y". As an example, "x" may represent an article of law whereas "y" represents a legal commentary.

The document enhancement unit 12 is now configured so that it orders references in the output document by the category of the referenced document. In this case, the "x" references and extracts of documents B and D are grouped together, under a header labeled "x" in the output document. Document C is placed under a header labeled "y" in the output document. Within a category group, the documents can again be ordered in a suitable manner, for example based on chapter or section number, article or rule number, alphabetically, etc.

Figure 6 schematically shows a client-server system according to an embodiment of the invention. The system comprises a document server 61 and a document reader client 65, connected via a network 64. The server 61 comprises a communications unit 62 adapted to communicate with a client 65 and configured to serve as a document selection unit, and a document enhancement unit 63 configured to communicate with the communications unit 62 and with a database unit 60.

As an example, the server 61 can be a networked server computer, the client 65 a terminal configured to execute web-browser software (also termed a HTTP client), the network 64 the internet and/or a local/wide area network based on the Internet Protocol. The communications unit 62 can comprise the web server software (also termed HTTP server). The document enhancement unit 63 can be a part of a content management system (CMS) adapted to generate HTML pages in response to requests received from the client 65 via the web server 62 and based on data retrieved from database unit 60, which may be implemented as a SQL-based database server. In particular, the CMS can be configured to interpret certain requests as selections of an input document as described in this application, and perform the action as described in order to generate an output document, which can then be served as HTML page to the client 65 via web server 62.

The system of figure 61 is also particularly well-suited to generate and serve to the client 65 the expandable output documents as already described in reference to figure 1, where the CMS 63 and web server 62 can be configured for using the earlier-described CSS technique, the AJAX technique, or any other available technique.

If certain input documents are repeatedly requested, it may be advantageous to implement a caching system in the web server 62 or CMS 63, so that a generated output document for a certain input document is cached and can be used in response to future requests in which the same input document is selected. A mechanism will be needed to invalidate the cache in case the documents in the database are changed.

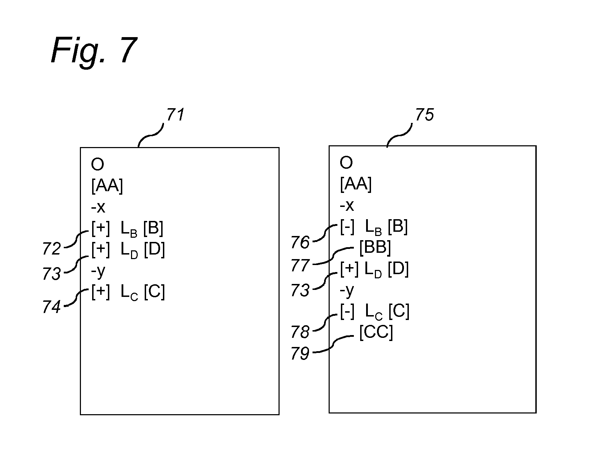

Figure 7 schematically shows an expandable digital output document 71, 75 labeled O in a first, original state 71 and in a partially expanded state 75. The document O comprises detailed data [AA] from input document A and comprises a list of references L_{B} and L_{D} to documents B and D (under category "x") and L_{C} to document C (under category "y"). Each of the references L_{B}, L_{D}, and L_{C} is provided with an expansion control, respectively indicated by numerals 72, 73, and 74. The expansion symbol can be shaped as a [+] plus symbol, as is commonly used in Graphical User Interfaces to indicate that something may be expanded.

In the second state 75 of the expandable output document, the user has clicked on expansion controls 72 and 74, so that detailed data [BB] concerning document B and [CC] concerning document C is displayed in the expanded spaces 77 and 79.

An advantage of an expandable output document is that a reader of the document can quickly retrieve additional data in order to find his way. In practice, it is for example often the case that referenced data appears potentially relevant based on the brief extract data (such as the documents title), but closer inspection of the full document then often reveals that the document is not relevant. It is therefore advantageous if the closer inspection can be performed quickly and with little effort from the user. It is remembered that in prior art digital systems, user must first open the relevant digital source and then navigate table of contents or sitemaps in order to arrive at the full text of a referenced document, which is a cumbersome process.

As mentioned before, the expansion of references in the digital output document can be implemented in various ways. One way is embedding the [BB] and [CC] data in the document as originally transmitted to the client device, but configured so that the client device will not initially display it (for example using the CSS display:none attribute). Another way is by adding JavaScript functionality to the document as originally transmitted to the client, so that an asynchronous (AJAX) request for the [BB] and [CC] data is transmitted to the server when the user triggers expansion controls 72 and 74 respectively. Yet another way is through a proprietary client-server protocol and document format. For example, the document viewer on the client device could be a custom piece of software (e.g. a Windows application, Android or IOS application, etc) implementing the above described measures without explicitly making use of CSS or AJAX, instead obtaining essentially the same result using different standards or proprietary formats. It is even possible to wrap-up the database, server, and client as described in reference to figures 6 and 7 in one monolithic application.

After triggering the expansion of the reference, the corresponding expansion control may be updated to indicate expansion is no longer possible. The [+] symbol 72, 74 could for example be replaced by a [-] symbol 76, 78.

It is understood that some documents may not, in their original form, comprise digital references, for example documents published in paper form or as PDF documents without (hyper)links. As was mentioned before, these documents may be automatically processed to become digital (input) documents with digital references. For example, a paper document may be scanned, OCR'ed (that is: adding a digital version of the text through Optical Character Recognition), after which an digital references can be added. One way adding digital references is by replacing text strings such as "Article 54 EPC" with an appropriate hyperlink tag. More advanced language parsing algorithms may be used, so that more complex forms may be automatically parsed, so that for example the string "Articles 22 and 39 PCT" yields links to both PCT articles. Additionally or alternatively, a human editor may add appropriate references. In that case, it may be advantageous that the editor provides a separate linking document that is to be included with the digital input document. The separate linking document is in fact a node document such as described earlier, with a reference to the digital document in which it is to be included and furthermore the references added by the human operator. This advantageously separates the automatically generated (e.g. scanned, OCR'ed, etc) document from the human-edited links. In case the digital input document is "refreshed" (e.g. through the scanning of an updated source or by using an improved automatic parser), then the human-edited content is not overwritten. The action of refreshing the document would then include adding the human-edited links. The refreshed input document then again includes the references that were edited by the human editor.

It is to be understood that the invention is limited by the annexed claims and its technical equivalents only.

It is noted that the term computer should be interpreted broadly, as for example nowadays portable devices such as mobile phones can have sufficient computer resources to implement a full system according embodiments of the invention including database. It is also noted that the separation into functional modules "document selection unit", "document enhancement unit", "database unit" need not be strictly adhered to in practical implementations. It is possible to practice the claimed invention using different functional partitioning. For example, database may run o the same server computer 61 as the web server 62, the web server could integrate the CMS 63 functionality, etc. It is even possible to have the database 10 not fully contain all relevant documents on local memory storage, but let the database retrieve them "on-the-fly" (as needed) from e.g. a cloud computing service or the internet in general.

In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. System for generating a digital output document (34, 44, 54, 71), comprising
- a database unit (10, 60) comprising digital documents, said digital documents comprising digital references to each other;
- a document selection unit (11, 62), for selecting (20) a digital document from the database unit as an input document (30, 40, 50); and
- a document enhancement unit (12, 63);
wherein the document enhancement unit (12, 63) is configured to
- generate (21) a first list of items identifying digital documents to which the input document comprises at least one reference;
- generate (22) a second list of items identifying digital documents which documents comprise at least one reference to the input document;
- combine (23) the first and the second list of items identifying digital documents to form a combined list of items identifying digital documents; and
- generate (24) a digital output document comprising an extract or the full contents of the input document and digital references to each digital document identified by an item on the combined list.

2. System according to claim 1, wherein the digital references to each digital document in the generated output document (34, 44, 54, 71, 75) are ordered based on a type of the digital document referred to by each respective digital reference.

3. System according to claim 1 or 2, further comprising a document server (62), such as a HyperText Transfer Protocol, HTTP, server, said server being connected to the document enhancement unit (12, 63), wherein the server is configured to
- receive a request for a digital document from a client (65) connected via a network, such as a HTTP client connected via an Internet Protocol, IP, network;
- cause the document selection unit (11, 62) to select the digital document as the input document (30, 40, 50) from the database unit;
- cause the document enhancement unit (12, 63) to generate the digital output document (34, 44, 54, 71, 75) by enhancing the input document; and
- send the digital output document to the client (65) as response to the request.

4. System according to claim 3, wherein the digital output document (34, 44, 54, 71, 75) includes a digital reference that is provided with a user interface control which, if triggered via the client (65), causes an extract or the full contents of the document referenced by the reference to be shown as part of the output document.

5. System according to any of the previous claims, wherein the database unit (10, 60) comprises a table comprising, for a selected digital document, a list of digital documents that the selected digital document refers to.

6. System according to any of the previous claims, wherein the digital documents comprise text coded in HyperText Markup Language, HTML, and the digital references comprise HTML tags, in particular HTML "anchor" tags with an "href" attribute.

7. System according to any of the previous claims, wherein the digital references to each digital document in the generated output document (34, 44, 54, 71, 75) are provided with extract information from the digital document referred to by each respective digital reference.

8. System according to claim 7, wherein the extract information is a title and/or summary of the digital document.

9. System according to claim 7 or 8, wherein the database unit (10, 60) is configured so that the extract information of a digital document can be retrieved separate from the digital document itself.

10. Method for generating a digital output document (34, 44, 54, 71, 75), the method comprising
- selecting (20) a digital document as an input document;
- generating (21) a first list of items identifying digital documents to which the input document comprises at least one reference;
- generating (22) a second list of items identifying digital documents which documents comprise at least one reference to the input document;
- combining (23) the first and the second list of items identifying digital documents to form a combined list of items identifying digital documents; and
- generating (24) a digital output document comprising an extract of the input document and digital references to each digital document identified by an item on the combined list.

11. Method according to claim 10, further comprising:
- receiving a request for a digital document from a client (65) connected via a network (64), such as a HTTP client connected via an Internet Protocol, IP, network;
- selecting the requested digital document as the input document from the database unit (10, 60); and
- after generating the digital output document (34, 44, 54, 71, 75), sending the digital output document to the client as response to the request.

12. Method according to claim 11, further comprising:
- prior to sending the digital output document (71, 75), providing a digital reference of the digital output document with a user interface control (72, 73, 74) which, if triggered via the client (65), causes an abstract or the full contents of the document referenced by the reference to be shown as part (77, 79) of the output document (75).

13. Method according to any of the claims 10-12, wherein the action of generating (21) a first list of items and/or the action of generating (22) a second list of items comprises the action of
- querying a database table comprising, for a selected digital document, a list of digital documents that the selected digital document refers to.

14. Method according to any of the claims 10-13, further comprising
- ordering the digital references to each digital document in the generated output document (34, 44, 54, 71, 75) based on a type of the digital document referred to by each respective digital reference, such as a type retrieved from a type field in a database table.

15. Computer-readable storage medium comprising a computer program that, when executed on a computer, performs a method according to any of the claims 10-14 or causes the computer to behave as the system according to any of the claims 1-9.
